# EUROPEAN PATENT SPECIFICATION

(11) **EP 2 953 902 B1**
(45) Date of publication and mention of the grant of the patent: **08.05.2019**
(21) Application number: 14703069.6
(22) Date of filing: 05.02.2014
(51) Int. Cl.: C02F 1/32

(54) **UV APPARATUS**
UV-VORRICHTUNG
APPAREIL À UV

(30) Priority: 05.02.2013 GB 201302035
(43) Date of publication of application: 16.12.2015
(73) Proprietor: Ipurtech Limited, Salford, Greater Manchester M6 6AJ (GB)
(72) Inventor: GUMMER, Edward Christopher, Droitwich Worcestershire WR9 8DB (GB); THEAKER, David Nigel, Lancashire OL4 2QW (GB)
(74) Representative: Jackson, Derek Charles
(86) International application number: PCT/EP2014/052268
(87) International publication number: WO 2014/122185

(56) References cited:
- WO-A1-00/20045
- WO-A1-03/086618
- WO-A1-2011/049277
- JP-A- H11 179 350
- US-A- 5 069 885
- US-A1- 2002 172 627
- US-A1- 2010 224 562

## Description

This invention relates to a UV apparatus which can be used for treating liquids.

UV (ultraviolet) light is well known for controlling the reproduction of bacteria, fungi and viruses in liquid, such as water. UV light kills these species by inducing sufficient DNA damage that they are unable to replicate and so die. The UV light is only effective, however, if a sufficient dose is administered, the dose being the combination of power (wavelength and intensity) of the light as well as the time the light illuminates the cell. Generally, bacteria are most sensitive to UV light with a wavelength in the range of 240 to 300 nanometres.

UV light has normally been restricted to preventing bacteria growth in clear liquids where the UV light may penetrate a centimetre or more into the liquid. However, where the liquid is cloudy, is a particulate suspension or an emulsion, for example of oil and water, the UV light is only effective at the liquid surface and bacteria or the like in the body of the liquid (for example at a depth of about 0.1 mm or more) remain unaffected.

WO00/20045 discloses a method and apparatus for effective inactivation of micro-organisms in fluids with relatively high absorbance so as to limit damage. The apparatus has a large diameter passage flow-through UV radiation system with a static mixer system providing an intensive flow mixing within an irradiation area in which the fluid flow is controlled to provide a flow rate not less than a minimum flow rate corresponding to a maximum fluid residence time within the irradiation area required for efficient mixing, and a maximum flow rate providing a minimum residence time for effective inactivation.

WO03/086618 discloses a reactor for carrying out photocatalytic reactions in liquid or gaseous reacting media, consisting of a reactor vessel with a solid photocatalyst, supply and discharge lines, mixing devices and a device for supplying electromagnetic radiation, which contains microradiators that absorb electromagnetic radiation and radiate light in a time-delayed manner, whereby this light excites the photocatalyst. US 5 069 885 and US 2002 0172627 disclose reactors with ultra -violet lamps for carrying out photocatalytic reactions, including internal mixers with photocatalyst.

WO2011/049277 relates to a water treatment device which either suppresses or reduces the scale and bio-fouling which occur within the pipes of, for example, water purifiers and bio-processes, in which UV is irradiated over a device fitted with a titanium filter. The device comprises a flow-pathway-forming member formed with an inflow port at one end and formed with an outflow port at the other end; a filtration unit which is fitted below the flow-pathway-forming member and connects the inflow port through to the outflow port; a titanium filter which is disposed inside the filtration unit and is joined to the flow-pathway-forming member; and a UV lamp which is disposed outside the filtration unit and irradiates ultraviolet light onto the filtration unit; and the filtration unit comprising a transparent material. The titanium filter is shaped as a column open at the top and is fitted to the flow-pathway-forming member, and, once a fluid has passed through the inflow port and into the filtration unit, the fluid is filtered by the titanium filter and is then discharged through the outflow port.

JPH11179350 discloses an ultraviolet radiation device in which a bar-shaped ultraviolet lamp is disposed coaxially at the centre of a pipe through which a fluid to be treated flows, and a plurality of flow resistors are arranged in the gap between the lamp and the pipe. The pipe is formed from ultraviolet ray transmitting materials so that ultraviolet rays from an ultraviolet lamp disposed outside the pipe can be applied to the fluid in the pipe. Each of the fluid resistors is formed into a fan-shaped plate wherein the width of the plate is much narrower toward the centre than at the outer periphery thereof, And the resistors are arranged in such a manner that they are spaced at regular intervals in the axial direction so as not to interfere with each other and are inclined towards the downstream side and they are spaced at predetermined angles from one another in the circumferential direction of the pipe.

It is therefore an object of the present invention to provide an apparatus which overcomes, or at least ameliorates this problem.

According to the present invention there is provided a UV apparatus comprising: a tube of UV transparent material; at least one UV lamp provided externally of the tube so as to emit UV light towards the tube; and a core extending in an axial direction within the tube, the core being in the form of a coil with reversals such that liquid passing through the tube alternately rotates in an anti-clockwise direction and then rotates in a clockwise direction, wherein the coil reversals create a series of vortices with massive turbulence thereby continually presenting different portions of the liquid at the inner surface of the tube and wherein a photocatalyst is provided on at least one surface of the core and responsive to UV light emitted by the lamp to generate free radicals in liquid passing through the tube.

Where the tube is of relatively small diameter, say about 25 mm or less, the core may be in the form of an open coil with reversals to disturb liquid flow without restricting flow. In larger diameter tubes the core may be a solid helical coil with reversals while still allowing sufficient free cross-sectional area for high flow rates of liquid. The solid helical coil may be a simple helical spring or a solid coil of plastics, concrete or metal. In at least one embodiment, the direction of the coil is reversed at each complete revolution.

The tube may comprise quartz or a UV transparent polymer.

The core may be made of a ceramic, plastics or metal material.

A plurality of UV lamps may be provided, for example extending in an axial direction of the tube. The lamps may be spaced around the circumference of the tube. For example, four lamps may be provided spaced substantially equally around the circumference of the tube.

The or each lamp may extend substantially the entire operative length of the tube or may be in the form of a plurality of lamps in an axial configuration.

At least one reflector may be provided to reflect UV light emitted from the or each lamp in a direction other than towards the tube back towards the tube. Alternatively, reflectors may be incorporated into the or each lamp. The or each reflector may be configured to focus light onto the inner surface of the tube.

The photocatalyst may be in the form of a coating or may be incorporated into the material of the core.

The catalyst may comprise titanium dioxide, such as nano-crystalline (anatase) titanium dioxide, and/or zinc oxide.

Means may be provided such that the flow of liquid through the tube is intermittent, for example pulsed. In this way, the photocatalyst may be intermittently uncovered and therefore exposed directly to the UV light.

A non-return valve may be provided to prevent liquid re-entering an inlet of the tube.

A valve, such as a solenoid valve, may be provided to direct liquid exiting the tube back to a source of potentially contaminated liquid or to a source of cleaning liquid for receiving treated liquid. Means, such as a pump, may be provided for circulating the cleaning fluid through the tube. The cleaning fluid may incorporate abrasive particles.

The apparatus may include a single tube or a plurality of tubes. Where a plurality of tubes is provided, the tubes may be arranged in parallel in a substantially straight line array. A plurality of lamps may be arranged around the array of tubes. The lamps may be surrounded by a single reflector, for example in the form of a reflective inner surface of a container for the apparatus. Although arranged in parallel, the tubes may be connected either in series or in parallel.

In an embodiment of the invention, two or more tubes are arranged in parallel and are provided with valves at each end so as to isolate the tubes from each other. Valves provided at the inlet of the tubes may be solenoid valves and may operate to allow liquid to enter one of the tubes at a time. Valves provided at the outlet of each of the tubes may be non-return valves and serve to prevent liquid flowing back through any of the tubes.

Means may be provided for introducing photocatalytic beads into the liquid being treated. A Venturi arrangement may be provided for introducing the beads upstream of the or each tube. Means may further be provided for removing such photocatalytic beads. A slanting grid may be provided downstream of the or each tube for removing the beads from the liquid. The beads may be of ceramic, plastics or metal and may incorporate or be coated with the same or a different photocatalyst as that used in conjunction with the core.

Alternatively or additionally, means may be provided for injecting a chemical, such as hydrogen peroxide, into the fluid stream.

For a better understanding of the present invention and to show more clearly how it may be carried into effect reference will now be made, by way of example, to the accompanying drawings in which:
Figure 1 is a diagrammatic cross-sectional view through one embodiment of a UV apparatus according to the present invention;
Figure 2 is a diagrammatic elevational view of the UV apparatus shown in Figure 1 together with ancillary equipment;
Figure 3 is a cross-sectional view through a UV apparatus according to the present invention and incorporating a plurality of tubes operating in parallel;
Figure 4 illustrates a modification of the apparatus of Figure 3, in which two tubes are arranged in parallel and operated sequentially; and
Figures 5, 6 and 7 illustrate a modification of the apparatus of Figure 2 by providing means for introducing and removing photocatalytic beads into and from liquid being treated in the apparatus.

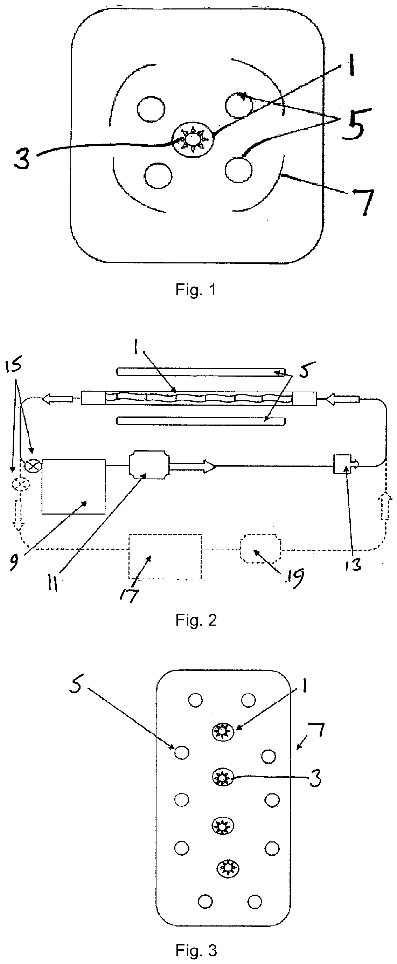

The UV apparatus shown in Figure 1 comprises a tube 1 of UV transparent material, such as quartz or a UV transparent polymer, which typically has a length of about 600 to 1200 mm and a diameter of about 20 to 100mm, although other dimensions are possible. A liquid to be treated passes through the tube 1. In practice, the liquid is pumped from a source of contaminated liquid, through a coarse filter (not shown), through the tube 1 and is then returned to the source, although other arrangements may be employed, such as passing the treated liquid to an alternative destination. A core 3 is provided within the tube 1, the core extending in the axial direction of the tube, and is configured to create turbulent flow in liquid passing through the tube as will be explained in more detail hereinafter. The core 3 is typically made of a ceramic, plastics or metal material and is configured to create a vortex in the liquid flowing through the tube 1 such that, in use of the apparatus, different portions of the liquid are continually presented at the inner surface of the tube. UV light is provided by a plurality of UV lamps 5 and reflectors 7 are provided where necessary to reflect UV light emitted from the lamps in a direction other than towards the tube 1 back towards the tube 1. Alternatively, reflectors may be incorporated into the lamps 5 to create a directional profile to the emitted UV light. The lamps 5 are spaced around the circumference of the tube 1 (for example, four lamps may be provided spaced substantially equally around the circumference of the tube) and extend in the axial direction of the tube 1, substantially along the length thereof and each lamp as illustrated may be a single lamp extending substantially the entire operative length of the tube or may be in the form of a plurality of lamps in an axial configuration. Clearly, other arrangements are possible for the lamps.

Ideally, the lamps 5 emit substantially monochromatic radiation at a frequency of 254 nm. This eliminates as far as possible, contamination with infrared radiation so minimising the generation of heat and avoiding the need for a cooling fan (although a cooling fan may be provided if required). The substantial elimination of infrared radiation also increases the effectiveness of the lamps by increasing the overall output of UV light.

The reflectors 7 are ideally configured to focus light onto the inner surface of the tube 1.

The tube 1 and the core 3 are dimensioned in the illustrated embodiment such that the surface of the core is some 3 to 15 mm from the inner surface of the tube, for a 50mm internal diameter tube.

The core 3 is provided, at least on the surface thereof, with a catalyst. The catalyst may be in the form of a coating or may be incorporated into the material of the core. The catalyst is in the form of a photocatalyst, such a titanium dioxide, which has the effect of splitting water in the liquid to form active oxidising radicals, the radicals in turn killing the bacteria or the like. It has been found that the UV light dose required to activate the catalyst is much lower than the dose required to kill the bacteria, so that UV penetration in a cloudy liquid is sufficient to activate the catalyst and to kill bacteria or the like in the body of the liquid even where the dose of UV is insufficient to do so alone. For example, it has been found that a titanium dioxide catalyst requires only 0.001 Watts per square metre for the catalyst to generate DNA-disrupting hydroxyl free radicals. This is a factor of 10⁻⁵ less than that required at the inner surface of the tube 1 for killing the bacteria or the like. Moreover, individual portions of the liquid are only exposed to a sufficient direct dose of UV light on a transient basis during its turbulent flow through the tube, while the catalyst on the core 3 is permanently exposed to the UV light and is therefore receiving UV radiation and generating free radicals at all times the UV lights are energised. Thus, the combination of direct UV radiation and UV activation of the catalyst is particularly effective in cloudy liquids and allows purification at substantially higher throughput rates compared with only direct UV radiation. If the liquid is especially optically dense and therefore significantly reduces penetration of UV light, means may be provided such that the flow of liquid through the tube is intermittent, for example pulsed, so that the photocatalyst is intermittently uncovered and therefore exposed directly to the UV light. The burst of energy received by the photocatalyst is sufficient that it remains active for several seconds, until the flow is again interrupted. Overall, it has been found that the use of a photocatalyst increases the rate at which the DNA of bacteria is disrupted by more than 50% compared with the use of direct UV alone.

In more detail, the photocatalyst may be nano-crystalline titanium dioxide, although other photocatalysts, such as zinc oxide, may be employed, either alone or in combination. Where titanium dioxide is used, this is generally in the form of nano-crystalline titanium dioxide in its anatase form which is either added to the material of the core as a powder or formed into a coating by the addition of a binder and applied, for example by spraying or dipping, onto the outer surface of the core.

In general, the larger the internal diameter of the tube 1 the greater the volume of liquid that may be disinfected in a certain time. Moreover, subject to maintaining the required turbulence, the larger the diameter of the tube the greater the surface area of the core 3 that can be accommodated within the tube. This increases the surface area of the catalyst with a corresponding increase in the performance of the apparatus.

Where the tube 1 is of relatively small diameter, say about 25 mm or less, the core 3 may be in the form of an open coil with reversals to disturb liquid flow without restricting flow. In larger diameter tubes the core 3 may be a solid helical coil with reversals while still allowing sufficient free cross-sectional area for high flow rates of liquid. The solid helical coil may be a simple helical spring or a solid coil of plastics, concrete or metal. In at least one embodiment, at each complete revolution the flow of liquid in the coil is reversed and turbulence is created. This creates an ever changing thin film of liquid at the inner surface of the tube, and also helps to maintain the inner surface of the tube clean and free of patches of grime.

Figure 2 shows the UV apparatus, including the tube 1, core 3 and lamps 5 together with a source 9 of contaminated liquid and a pump 11 for circulating the liquid. A non-return valve 13 is provided to prevent liquid returning from an inlet of the tube 1 to the pump 11 or source 9. A valve 15, such as a solenoid valve, may be provided to direct liquid exiting the tube 1 either to the source 9 or to an optional part of the additional apparatus including a source 17 of cleaning liquid for receiving treated liquid, and a further pump 19 for circulating the cleaning liquid to the tube 1.

The configuration of the core 3 in the illustrated embodiments is such that the liquid passing through the tube alternately rotates in an anti-clockwise direction for about a centimetre and then rotates in a clockwise direction for a similar axial distance. Clearly the distance between alternate directions may be altered, especially in dependence upon the scale of the apparatus. The alternating flow directions create a series of vortices with massive turbulence thereby continually presenting different portions of the liquid at the inner surface of the tube. It has been found in practice that it is preferred to provide at least six flow reversals along the length of the tube 1. The core has been found to create fluid forces which keep the surface of the tube 1 clean and therefore free of adherent materials which would normally form an impervious filter for the UV light. This either eliminates or substantially reduces the need for chemical flushing of the tube to remove adherent materials.

Although the turbulent flow of the liquid effects cleaning of the inner surface of the tube 1, this is not always sufficient, especially when the heat produced by the UV lamps tends to char constituents of the liquid. To help maintain the inner surface of the tube 1 clean, the cleaning fluid may be circulated periodically, for example for a short period each day or more frequently (such as hourly) if required. The cleaning fluid may incorporate abrasive particles if desired.

In practice the flow rate of the liquid through the tube is such that the liquid is exposed to the UV light for a time in the range of 1 to 10 seconds.

The intensity of UV light at the point of the tube 1 where it can be effective is in the range of 140 to 300 Watts per square metre for each lamp 5. The cross-over of light from the four lamps 5 shown in Figure 2 will increase the intensity. The dose range (power x time) to kill with UV only is in the range of 10 to 100 Watts per square metre per second for most bacteria in clear water, while moulds may require 100 to 600 Watts per square metre per second.

Figure 3 shows an arrangement in which the UV apparatus includes a plurality of tubes 1. As illustrated, the tubes 1 are arranged in parallel in a substantially straight line array, but other configurations are possible. Each tube is provided with a core 3 and a plurality of lamps 5 are arranged around the array of tubes (although, if desired the lamps could also be arranged within the array of tubes). The lamps 5 are surrounded by a single reflector 7 in the form of a reflective inner surface of a container for the apparatus, although again a different reflector arrangement can be used if desired. Although arranged in parallel, the tubes 1 may be connected either in series or in parallel, either to maximise the disinfecting effect or to maximise throughput.

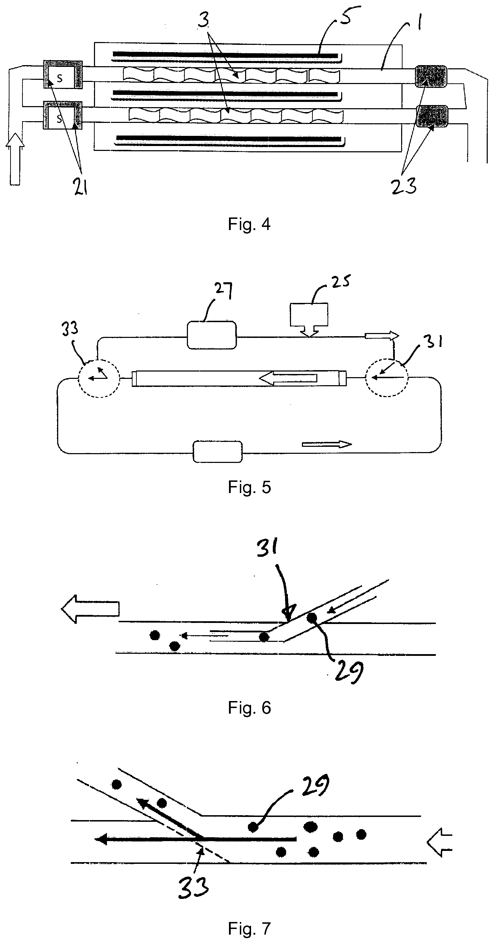

Figure 4 shows an apparatus which is particularly useful where the liquid is especially optically dense. In this case, two tubes 1 are arranged in parallel (although more than two tubes may be so arranged of desired) and are provided with valves 21, 23 at each end. Valves 21 provided at the inlet of the tubes 1 may be solenoid valves and operate to allow liquid to enter one of the tubes at a time. Valves 23 provided at the outlet of each of the tubes 1 are non-return valves and serve to prevent treated liquid flowing back through either of the tubes. The two tubes are operated sequentially, with each tube emptying in turn to reveal the catalyst to the UV light. Once the core 3 has been exposed to the required dose of UV light, the valves 21 are switched so that the liquid flows through the tube with the active catalyst. The cycle time may be, for example, from 1 to 15 minutes.

Figures 5, 6 and 7 show an apparatus in which photocatalytic beads may additionally be introduced into, and removed from, the liquid being treated. As shown in Figure 5, the apparatus includes a valve 25 for introducing beads into a bead flow circuit and a pump 27 for circulating the beads through the tube 1. The beads may be of ceramic, plastics or metal and may incorporate or be coated with the same or a different photocatalyst as that used in conjunction with the core 3. The beads provide additional sites for the generation of free radicals and assist in maintaining the inner surface of the tube 1 clean, while preferably circulating only in a limited part of the apparatus. As shown in more detail in Figures 6 and 7, the beads 29 may be introduced upstream of the inlet to the tube 1 by way of a Venturi arrangement 31 and may be removed from the liquid downstream of the outlet of the tube, by way of a slanting grid 33 which is dimensioned to restrain and divert the beads back to the pump 27.

Alternatively or additionally, means may be provided for injecting a chemical, such as hydrogen peroxide, into the fluid stream. The chemical, under the influence of the UV lamps, increases the density of aggressive chemical radicals in the fluid stream. This can be of particular use in the treatment of waste water to reduce Carbon Oxygen Demand (COD) and Biological Oxygen Demand (BOD).

It has been found that the apparatus according to the present invention is particularly useful in the control of bacteria in metalworking fluids, cloudy water, and in sensitive environmental areas such as open sea drilling.

## Claims

1. UV apparatus comprising: a tube (1) of UV transparent material; at least one UV lamp (5) provided externally of the tube so as to emit UV light towards the tube; and a core (3) extending in an axial direction within the tube, the core (3) being in the form of a coil with reversals such that liquid passing through the tube alternately rotates in an anti-clockwise direction and then rotates in a clockwise direction, **characterised in that** the coil reversals create a series of vortices with massive turbulence thereby continually presenting different portions of the liquid at the inner surface of the tube and **in that** a photocatalyst is provided on at least one surface of the core and is responsive to UV light emitted by the lamp to generate free radicals in liquid passing through the tube.

2. UV apparatus as claimed in claim 1, wherein the core (3) is in the form of an open coil with reversals to disturb liquid flow without restricting flow.

3. UV apparatus as claimed in claim 1, wherein the core (3) is a solid helical coil with reversals while still allowing sufficient free cross-sectional area for high flow rates of liquid, for example the solid helical coil may be a simple helical spring or a solid coil of plastics, concrete or metal.

4. UV apparatus as claimed in any preceding claim, wherein the direction of the coil is reversed at each complete revolution.

5. UV apparatus as claimed in any preceding claim, wherein the catalyst comprises titanium dioxide and/or zinc oxide, for example titanium dioxide in the form of nano-crystalline (anatase) titanium dioxide.

6. UV apparatus as claimed in any preceding claim, wherein means is provided such that the flow of liquid through the tube (1) is intermittent, for example pulsed.

7. UV apparatus as claimed in any preceding claim, wherein a non-return valve (13) is provided to prevent liquid re-entering an inlet of the tube (1).

8. UV apparatus as claimed in any preceding claim, wherein a valve (15), such as a solenoid valve, is provided to direct liquid exiting the tube (1) back to a source of potentially contaminated liquid or to a source of cleaning liquid for receiving treated liquid.

9. UV apparatus as claimed in claim 8, wherein means (19), such as a pump, is provided for circulating cleaning fluid, for example incorporating abrasive particles, through the tube (1).

10. UV apparatus as claimed in any preceding claim and including a plurality of tubes (1).

11. UV apparatus as claimed in claim 10, wherein two or more tubes (1) are arranged in parallel and are provided with valves (21, 23) at each end so as to isolate the tubes from each other, for example valves (21) provided at the inlet of the tubes (1) may be solenoid valves and may operate to allow liquid to enter one of the tubes at a time and/or valves (23) provided at the outlet of each of the tubes (1) may be non-return valves and may serve to prevent liquid flowing back through any of the tubes.

12. UV apparatus as claimed in any preceding claim, wherein means (25, 31) is provided for introducing photocatalytic beads (29) into the liquid being treated, for example in the form of a Venturi arrangement (31) provided for introducing the beads (29) upstream of the or each tube (1).

13. UV apparatus as claimed in claim 12, wherein means (33) is further provided for removing such photocatalytic beads (29), for example in the form of a slanting grid (33) provided downstream of the or each tube (1).

14. UV apparatus as claimed in any preceding claim, wherein means is provided for injecting a chemical, such as hydrogen peroxide, into the fluid stream.

## Patentansprüche

1. UV-Vorrichtung, die Folgendes umfasst: ein Rohr (1) aus UVdurchlässigem Material, mindestens eine UV-Lampe (5), die außerhalb des Rohrs bereitgestellt ist, sodass UV-Licht in Richtung des Rohrs emittiert wird, und einen Kern (3), der sich in einer axialen Richtung innerhalb des Rohrs erstreckt, wobei der Kern (3) in Form einer Windung mit Umkehrungen vorliegt, sodass Flüssigkeit, die durch das Rohr hindurchgeht, abwechselnd in einer Richtung im Gegenuhrzeigersinn rotiert und dann in einer Richtung im Uhrzeigersinn rotiert, **dadurch gekennzeichnet, dass** die Umkehrungen der Windung eine Reihe von Wirbeln mit enormer Turbulenz erzeugen, wodurch kontinuierlich unterschiedliche Teile der Flüssigkeit an der inneren Oberfläche des Rohrs vorliegen, und dadurch, dass ein Photokatalysator an mindestens einer Oberfläche des Kerns bereitgestellt ist und auf UV-Licht, das von der Lampe emittiert wird, reagiert, um freie Radikale in einer Flüssigkeit zu erzeugen, die durch das Rohr hindurchgeht.

2. UV-Vorrichtung nach Anspruch 1, wobei der Kern (3) in Form einer offenen Windung mit Umkehrungen vorliegt, um einen Flüssigkeitsfluss ohne Einschränkung des Flusses zu stören.

3. UV-Vorrichtung nach Anspruch 1, wobei der Kern (3) eine feste helikale Windung mit Umkehrungen ist, während dennoch ausreichend freie Querschnittsfläche für hohe Flussraten von Flüssigkeit ermöglicht wird, beispielsweise die feste helikale Windung eine einfache helikale Feder oder eine feste Windung aus Kunststoffen, Beton oder Metall sein kann.

4. UV-Vorrichtung nach einem vorstehenden Anspruch, wobei die Richtung der Windung bei jedem vollständigen Umlauf umgekehrt ist.

5. UV-Vorrichtung nach einem vorstehenden Anspruch, wobei der Katalysator Titandioxid und/oder Zinkoxid umfasst, beispielsweise Titandioxid in Form von nanokristallinem (Anatas) Titandioxid.

6. UV-Vorrichtung nach einem vorstehenden Anspruch, wobei ein Mittel bereitgestellt ist, sodass der Fluss von Flüssigkeit durch das Rohr (1) intermittierend ist, beispielsweise gepulst.

7. UV-Vorrichtung nach einem vorstehenden Anspruch, wobei ein Rückschlagventil (13) bereitgestellt ist, um zu verhindern, dass Flüssigkeit wieder in einen Einlass des Rohrs (1) eintritt.

8. UV-Vorrichtung nach einem vorstehenden Anspruch, wobei ein Ventil (15), wie zum Beispiel ein Magnetventil, bereitgestellt ist, um Flüssigkeit, die aus dem Rohr (1) austritt, zurück zu einer Quelle von möglicherweise kontaminierter Flüssigkeit oder zu einer Quelle von Reinigungsflüssigkeit für die Aufnahme von behandelter Flüssigkeit zu leiten.

9. UV-Vorrichtung nach Anspruch 8, wobei ein Mittel (19), wie zum Beispiel eine Pumpe, für die Zirkulation von Reinigungsflüssigkeit, beispielsweise abrasive Partikel aufnehmend, durch das Rohr (1) bereitgestellt ist.

10. UV-Vorrichtung nach einem vorstehenden Anspruch und, die eine Vielzahl von Rohren (1) einschließt.

11. UV-Vorrichtung nach Anspruch 10, wobei zwei oder mehr Rohre (1) parallel angeordnet sind und mit Ventilen (21, 23) an jedem Ende bereitgestellt sind, um die Rohre voneinander zu isolieren, beispielsweise Ventilen (21), die an dem Einlass der Rohre (1) bereitgestellt sind, Magnetventile sein können und betrieben werden können, um den Eintritt von Flüssigkeit in eines der Rohre zu einem Zeitpunkt zu ermöglichen, und/oder Ventilen (23), die an dem Auslass von jedem der Rohre (1) bereitgestellt sind, Rückschlagventile sein können und dazu dienen können, das Zurückfließen von Flüssigkeit durch jedwedes der Rohre zu verhindern.

12. UV-Vorrichtung nach einem vorstehenden Anspruch, wobei ein Mittel (25, 31) für die Einführung von photokatalytischen Kügelchen (29) in die Flüssigkeit, die behandelt wird, bereitgestellt ist, beispielsweise in Form einer Venturi-Anordnung (31), die für die Einführung der Kügelchen (29) vorgeschaltet vor dem oder jedem Rohr (1) bereitgestellt ist.

13. UV-Vorrichtung nach Anspruch 12, wobei ein Mittel (33) weiter für die Entfernung derartiger photokatalytischer Kügelchen (29) bereitgestellt ist, beispielsweise in Form eines schrägen Gitters (33), das nachgeschaltet nach dem oder jedem Rohr (1) bereitgestellt ist.

14. UV-Vorrichtung nach einem vorstehenden Anspruch, wobei ein Mittel für das Einspritzen einer Chemikalie, wie zum Beispiel Wasserstoffperoxid, in den Flüssigkeitsstrom bereitgestellt ist.

## Revendications

1. Appareil à UV comprenant : un tube (1) de matériau transparent aux UV ; au moins une lampe à UV (5) fournie extérieurement au tube de manière à émettre une lumière UV vers le tube ; et un coeur (3) s'étendant dans un sens axial à l'intérieur du tube, le coeur (3) ayant la forme d'une bobine à inversions de sens de telle sorte qu'un liquide passant à travers le tube tourne de manière alternée dans un sens anti-horaire puis dans un sens horaire, **caractérisé en ce que** les inversions de sens de la bobine créent une série de vortex de turbulence massive présentant ainsi continûment différentes parties du liquide au niveau de la surface interne du tube et **en ce qu'**un photocatalyseur est fourni sur au moins une surface du coeur et est réactif à la lumière UV émise par la lampe pour générer des radicaux libres dans le liquide passant à travers le tube.

2. Appareil à UV selon la revendication 1, dans lequel le coeur (3) a la forme d'une bobine ouverte à inversions de sens pour perturber l'écoulement du liquide sans restreindre l'écoulement.

3. Appareil à UV selon la revendication 1, dans lequel le coeur (3) est une bobine hélicoïdale solide à inversions de sens permettant néanmoins une superficie en coupe transversale libre suffisante pour des débits d'écoulement élevés de liquide, par exemple la bobine hélicoïdale solide peut être un simple ressort hélicoïdal ou une bobine solide en plastique, béton ou métal.

4. Appareil à UV selon n'importe quelle revendication précédente, dans lequel le sens de la bobine est inversé à chaque révolution complète.

5. Appareil à UV selon n'importe quelle revendication précédente, dans lequel le catalyseur comprend du dioxyde de titane et/ou de l'oxyde de zinc, par exemple du dioxyde de titane sous forme de dioxyde de titane nanocristallin (anatase).

6. Appareil à UV selon n'importe quelle revendication précédente, dans lequel un moyen est fourni de telle sorte que l'écoulement de liquide à travers le tube (1) soit intermittent, par exemple pulsé.

7. Appareil à UV selon n'importe quelle revendication précédente, dans lequel un clapet anti-retour (13) est fourni pour empêcher le liquide d'entrer à nouveau dans une entrée du tube (1).

8. Appareil à UV selon n'importe quelle revendication précédente, dans lequel une vanne (15), telle qu'une électrovanne, est fournie pour diriger le liquide sortant du tube (1) de retour vers une source de liquide potentiellement contaminé ou vers une source de liquide de nettoyage destinée à recevoir un liquide traité.

9. Appareil à UV selon la revendication 8, dans lequel un moyen (19), tel qu'une pompe, est fourni pour circuler un fluide de nettoyage, par exemple incorporant des particules abrasives, à travers le tube (1).

10. Appareil à UV selon n'importe quelle revendication précédente et comportant une pluralité de tubes (1).

11. Appareil à UV selon la revendication 10, dans lequel deux ou plusieurs tubes (1) sont disposés en parallèle et sont dotés de vannes (21, 23) à chaque extrémité de manière à isoler les tubes les uns des autres, par exemple des vannes (21) fournies à l'entrée des tubes (1) peuvent être des électrovannes et peuvent fonctionner pour permettre au liquide d'entrer dans l'un des tubes à la fois et/ou des vannes (23) fournies à la sortie de chacun des tubes (1) peuvent être des clapets anti-retour et peuvent servir à empêcher le liquide de refluer à travers l'un quelconque des tubes.

12. Appareil à UV selon n'importe quelle revendication précédente, dans lequel un moyen (25, 31) est fourni pour introduire des billes photocatalytiques (29) dans le liquide en cours de traitement, par exemple sous forme d'un agencement Venturi (31) fourni pour introduire les billes (29) en amont du ou de chaque tube (1).

13. Appareil à UV selon la revendication 12, dans lequel un moyen (33) est en outre fourni pour retirer de telles billes photocatalytiques (29), par exemple sous forme d'une grille inclinée (33) fournie en aval du ou de chaque tube (1).

14. Appareil à UV selon n'importe quelle revendication précédente, dans lequel un moyen est fourni pour injecter un produit chimique, tel que du peroxyde d'hydrogène, dans le flux de fluide.
